# EUROPEAN PATENT APPLICATION

(11) **EP 4 481 890 A1**
(43) Date of publication of application: **25.12.2024**
(21) Application number: 23180595.3
(22) Date of filing: 21.06.2023
(51) Int. Cl.: H01M 10/48, B64D 27/24, H01M 10/613, H01M 10/625, H01M 10/6556, H01M 50/209, H01M 50/211, H01M 50/249, H01M 50/284, H01M 50/289, H01M 50/291, H01M 50/293, H01M 50/367, H01M 50/258

(54) **BATTERY ASSEMBLY, IN PARTICULAR FOR USE IN AN ELECTRICAL PROPULSION VTOL AIRCRAFT**

(71) Applicant: Lilium GmbH, 82234 Wessling (DE)
(72) Inventor: EECKELEERS, Laurent, 82234 Wessling (DE); MUELLER, Dan, 82234 Wessling (DE); SRINIVASAN, Karthick Sudarsan, 82234 Wessling (DE)
(74) Representative: Weickmann & Weickmann PartmbB

(57) **Abstract**

The present invention relates to a battery assembly (42), in particular for use in an electrical propulsion VTOL aircraft, comprising a base plate assembly (44), at least one battery stack assembly (20), each comprising a plurality of battery cells (12) stacked on top of the base plate assembly (20) along a stacking direction (S) thus forming a battery cell stack (10) and electrically connected in parallel or in series, and a housing (22) surrounding the battery cells (12) on all four sides, wherein each battery stack assembly (20) comprises at least one barrier plate member (16) inserted between neighboring battery cells (12) and connected to the housing (22) in order to form at least two separate sealed modules (14) of battery cells (12) within the corresponding battery stack assembly (20).

## Description

The present invention relates to a battery assembly, in particular for use in an electrical propulsion VTOL aircraft, an electrical propulsion VTOL aircraft comprising at least one such battery assembly, and a method for assembling such a battery assembly.

For certain novel use cases, such as for example electrical propulsion aircraft, in particular with vertical takeoff and landing (VTOL) capabilities, new requirements have been posed on the battery assemblies or modules serving as power sources for the corresponding devices. In particular, while on the one hand high capacities and maximum output characteristics are desired, on the other hand, such battery assemblies have to be absolutely safe and reliable during their operation. In particular, potential thermal runaway events have to be confined into smallest possible volumes in such battery assemblies in order to avoid catastrophic failures thereof. Even compared to current high-performance battery assemblies, which have for example been installed in electric vehicles, thermal runaway events during flight operation of electrical propulsion aircraft are potentially catastrophic if not contained in an adequate manner, since in order to evacuate passengers, the aircraft would first have to continue its flight and the pilot would have to identify a safe landing spot and perform an emergency landing, which requires a certain time.

Typical battery assemblies that have been proposed for such use cases comprise one or more battery cell stacks, which in turn consist of a plurality of battery cells, which are individually wired and managed. Such battery assemblies have to fulfill certain requirements concerning their mechanical properties and it is furthermore desired to minimize heat conduction both within the battery assembly as well as from the inside to their surroundings in order to fulfil performance requirements and allow safe and reliable handling and integration of such battery modules into corresponding aircraft.

It is therefore an object of the present invention to provide improved battery assemblies, in particular for use in electrical propulsion VTOL aircraft, which exhibit suitable behavior in the case of thermal runaway events as well as improved mechanical and thermal properties.

For this purpose, the battery assembly according to the present invention comprises a base plate assembly, at least one battery stack assembly, each battery stack assembly comprising a plurality of battery cells stacked on top of the base plate assembly along a stacking direction thus forming a battery cell stack and electrically connected in parallel or in series, and a housing surrounding the battery cells on all four sides, wherein each battery stack assembly comprises at least one barrier plate member inserted between neighboring battery cells and fixed to the housing in order to form at least two separate sealed modules of at least one battery cell each within the corresponding battery stack assembly.

Thus, by introducing and inserting barrier plate members inside battery stack assemblies which are themselves each surrounded by a housing, sealed modules of a smaller number of battery cells or even a single battery cell are formed, such that in cases of thermal runaway events the negative effects of these events can be contained within the corresponding sealed modules without spreading into the remaining parts of the respective battery stack assembly. Or in other words, potential thermal runaway events can be contained and a propagation to the adjacent modules can be prevented.

In addition, according to the present invention, not only do the barrier plate members serve as thermal isolation means between the different sealed modules of the at least one battery stack assembly, but by fixing them to the housing of the battery stack assembly, they also contribute to the mechanical stiffness and rigidity of the overall battery assembly and are therefore also referred to structural thermal barriers. Thus, the barrier plate members may not only lead to a thermal isolation of potential thermal runaway events but rather also to a mechanical isolation thereof by providing a mechanical stiffener to the stack, since even in case the battery cells within a certain sealed module of a battery stack assembly should incinerate and thus lose their mechanical integrity, the corresponding barrier plate member limiting said sealed module on its upper side will maintain its structural integrity and support the cells of adjacent modules such that it can still be able to tightly support the sealed battery cell module above the module in which the thermal runaway even has occurred.

It shall be pointed out that the base plate assembly of the battery assembly according to the present invention does not have to be a monolithic plate member but can also be arranged to comprise an interior space for housing certain components which will in detail be discussed below. Thus, even though the base plate assembly serves as a structural member which has to be able to support the weight of the components stacked on top of it, it can nevertheless comprise multiple parts, such as for example an upper structural cover, on which the battery stack assemblies rest, and a lower sheet member for enclosing said interior space.

According to the present invention, the at least one battery stack assembly of the battery assembly may further comprise a top compression plate and/or a bottom compression plate compressing the cell stack along the stacking direction. Therein, the compression plates serve to transfer the corresponding compression forces over to the housing.

Furthermore, in the battery assembly according to the present invention, the at least one battery stack assembly may further comprise a cooling arrangement extending inside and/or outside the housing and through and/or into each individual battery cell module, preferably in the form of a succession of individual connected cooling plates for the respective battery cell modules or in the form of a continuous cooling plate across the battery stack. In particular, the cooling arrangement may be connected to the individual battery cells by means of thermal pads and/or a thermal paste in order to ensure optimal heat transfer. It is obvious that in case such a cooling arrangement is provided inside the housing of the corresponding battery stack assembly, suitable measures have to be taken to seal the corresponding modules by means of the at least one barrier plate member. For example, said barrier plate members may be provided with suitable cutouts through which components of the cooling arrangement may be extending with suitable sealing means arranged around the cutouts. It shall furthermore be stated that in embodiments in which the cooling arrangement extends outside the housing, heat conduction over said arrangement in the case of a thermal runaway event can be prevented to an even higher degree, while with the cooling arrangement extending inside the housing, a higher cooling efficiency may be achieved.

Additionally, in the battery assembly according to the present invention, the at least one battery stack assembly may further comprise an electronics arrangement extending inside the housing and into each battery cell module, wherein the electronics arrangement preferably comprises at least one of a temperature sensor and a voltage sensor, for example one temperature sensor per battery cell module and/or one voltage sensor per battery cell. Said electronics arrangement may for example be formed of or comprise a flexible circuit board positioned inside the corresponding battery stack assembly. In a similar manner as just discussed for the cooling arrangement, the electronics arrangement also has to be installed in such a manner that the plurality of battery cell modules can still be sealed with respect to one another, and the barrier plate members employed for this task can still be rigidly connected to the battery stack assembly housing. By installing temperature and/or voltage sensors inside the barrier stack assembly, it is possible to detect operational parameters of the corresponding battery cells in real time in order to ensure their intended operation. Also, possible thermal runaway events can be immediately detected if such sensors are positioned in the direct proximity of the battery cells. The data output by said sensors may be forwarded to a central electronic control component of the corresponding battery assembly and there be processed in any suitable manner.

In order to be able to release gas and possible other debris in case of a thermal runaway event and to reduce thermal stress on the corresponding battery stack assembly in such cases, for each battery cell module, the housing of the battery stack assembly may comprise a through-hole provided with an overpressure vent, wherein the through-holes are preferably all positioned on the same side of the housing. Thus, in case a thermal runaway event should occur in one of the sealed battery cell modules, due to the resulting overpressure, the corresponding overpressure vent will burst and the gases can flow out of the battery stack assembly housing through the respective through-hole in a controlled manner.

For this purpose and to safely lead said gases away from the battery assembly while reducing the necessary components for the release of thermal runaway gases, at least one of the battery stack assemblies of the battery assembly according to the present invention may further comprise a venting duct external to the housing and connecting at least two of the through-holes and comprising an outlet opening. Thus, per battery stack assembly, only a single outlet opening for thermal runaway gases has to be provided, which reduces the installation effort when installing the corresponding battery assembly in a superordinate structure such as an electrical propulsion VTOL aircraft.

While the battery assembly according to the present invention may of course be provided with only a single battery stack assembly stacked on top of its base plate assembly, in order to maximize the capacity and possible output voltage while maintaining a suitable form factor, it may also comprise a plurality of substantially identical battery stack assemblies with their stacking directions arranged in parallel. Said plurality of battery stack assemblies may for example be arranged in a line next to one another or for example also in several rows forming a rectangle, which makes it possible to provide a lightweight battery pack with very good crash properties, in particular as crash absorption features may be placed below the base plate assembly as part of a superordinate structure in which the battery assembly is installed, in particular an aircraft.

In such embodiments of battery assemblies according to the present invention, a venting manifold may be provided, which connects the outlet openings of the plurality of battery stack assemblies. This venting manifold may further reduce the installation effort of the battery assembly, since even in embodiments with a plurality of battery stack assemblies only a single outlet for thermal runaway gases is provided which has to be connected to a single lead-out.

In embodiments with a plurality of battery stack assemblies, the battery assembly according to the present invention may further comprise a top structure assembly for mechanically coupling the plurality of battery stack assemblies, wherein preferably the top structure assembly may be provided with mounting points for mounting the battery assembly to a superordinate structure. Said top structure assembly thus mainly serves as a means for improving stiffness and mechanical rigidity of the overall battery assembly and may allow for fixing the battery assembly to a superordinate structure such as an electrical propulsion VTOL aircraft by means of its mounting points.

Concerning the base plate assembly of the battery assembly according to the present invention, said base plate assembly may comprise a structural cover for supporting the at least one battery stack assembly and an inner space, wherein in the inner space electronics components for managing the battery assembly may be housed, in particular at least one cell supervision circuit, at least one current sensor module, at least one power controller and/or one pyrofuse, and/or the base plate assembly and in particular the structural cover may comprise bottom mounting points for mounting the battery assembly to a superordinate structure and/or a neighboring battery assembly for connecting them in parallel. Thus, by integrating such electronics components into the baseplate assembly, the overall size of the battery assembly may be reduced, and it becomes possible to arrange such electronics components in close proximity to the battery cells, which they supervise and manage. Herein, the structural cover for supporting the at least one battery stack assembly has to be of sufficient mechanical strength to support the expected loads, while for the size and shape of the inner space, different configurations can be chosen in accordance with the electronics components, which are supposed to be housed therein.

As already briefly mentioned above, the at least one barrier plate member of the battery assembly according to the present invention may be formed with a mechanical strength that is sufficient to at least carry the mass of all components of the battery cell module positioned directly above it, preferably of all battery cell modules positioned above it, and/or the at least one barrier plate member may have heat-insulating material on its surfaces. Thus, the object of thermally and mechanically isolating possible thermal runaway events in the battery cell modules delimited by the corresponding barrier plate members can be ensured.

While both the number of battery cells and battery cell modules within the at least one battery stack can be chosen almost arbitrarily, for example taking into account the available overall size of the corresponding battery assembly as well as its intended capacity and output voltage, it has been seen that in a preferred embodiment, the at least one battery stack assembly may comprise in total 54 battery cells and/or each of the battery cell modules may comprise six battery cells or a single battery cell with a corresponding number of barrier plate members inserted between corresponding battery cells of the battery stack assembly.

According to another aspect, the present invention relates to an electrical propulsion VTOL aircraft, comprising a fuselage, at least one pair of wings, at least one electrical propulsion motor and at least one battery assembly according to the present invention. In particular, a plurality of battery assemblies may be provided and positioned in a symmetrical manner in lateral sidewalls of the fuselage in order to optimize the center of gravity position as well as weight distribution of the aircraft.

According to yet another aspect, the present invention relates to a method for assembling a battery assembly according to the present invention, which for each of the at least one battery stack assemblies comprises the steps of stacking the plurality of battery cells on top of each other with at least one barrier plate member inserted at a desired position between a pair of neighboring battery cells, compressing the resulting battery cell stack along the stacking direction, and installing the housing around the battery cell stack by fixing the housing to the barrier plate members and possibly upper and/or lower compression plates, wherein the housing may preferably comprise four individual sidewalls or a single sidewall and a U-shaped wall member. In particular, one of the sidewalls may be provided with the through-holes as well as overpressure vents for each of the separate sealed modules of battery cells divided by the barrier plate members.

Further features and advantages of the present invention will become even clearer from the following description of an embodiment thereof. These figures in particular show:
- Fig. 1: a single battery cell stack to be included in a battery assembly according to the present invention;
- Fig. 2: a battery stack assembly of a battery assembly according to the present invention in exploded and assembled views;
- Fig. 3: a battery assembly according to the present invention in exploded view;
- Fig. 4: the battery assembly of Fig. 3 in two views during a thermal runaway event; and
- Fig. 5: a VTOL aircraft according to the present invention in a schematic isometric view.

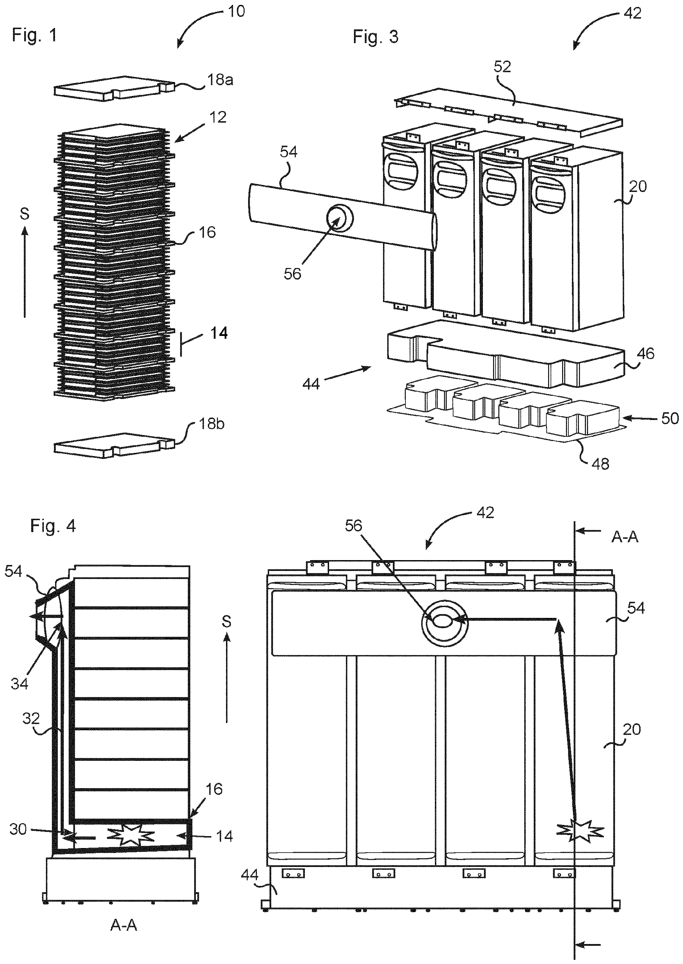

Fig. 1 in an isometric view shows a single battery cell stack 10, which is to be included in a battery assembly according to the present invention and discussed in the following. Said battery cell stack 10 consist of in total 54 individual battery cells 12 which are stacked along a stacking direction S and electrically connected in parallel or in series. Said battery cells 12 may for example be of a known pouch type and lithium-based. Within the battery cell stack 10, in total nine separate modules 14 of six battery cells 12 each are formed by inserting barrier plate members between respective neighboring battery cells 12. It shall at this point be mentioned that other numbers of modules per cell stack and battery cells per module may be employed in other embodiments of the present invention, for example even a single battery cell per module. Furthermore, the battery cell stack 10 comprises a top compression plate 18a and a bottom compression plate 18b which are adapted to compress the battery cell stack 10 along the stacking direction S in an assembled state.

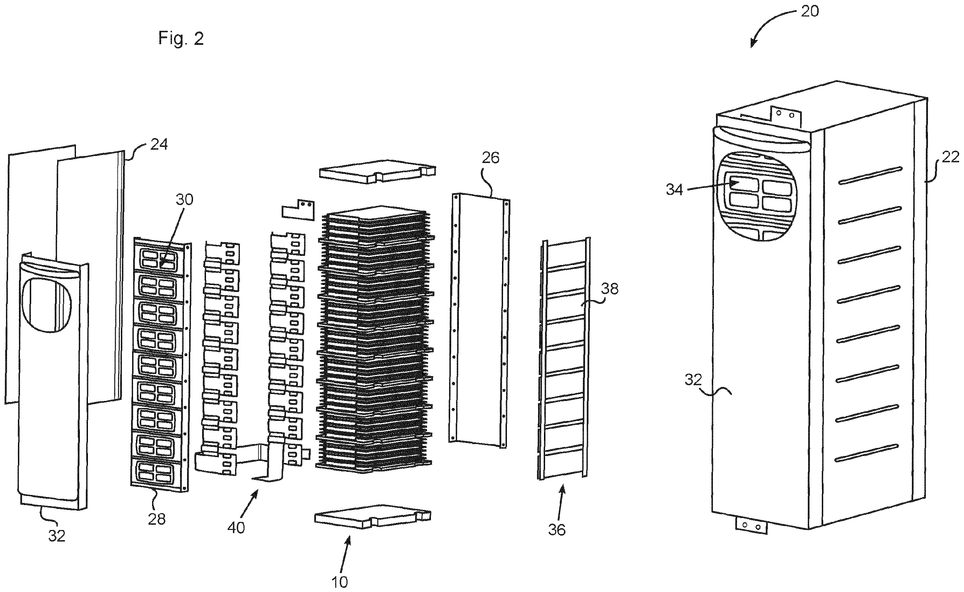

Fig. 2 now shows a battery stack assembly 20 comprising the battery cell stack 10 in both an exploded and an assembled view. In addition to the cell stack 10, the battery stack assembly 20 comprises a housing 22 in turn comprising two sidewalls 24, a back wall 26 and a front wall 28. Herein, the front wall 28 for each individual battery cell module 14 is formed with a through-hole 30 provided with an overpressure vent. Said through-holes are in turn connected by a venting duct member 32 with a single outlet opening 34.

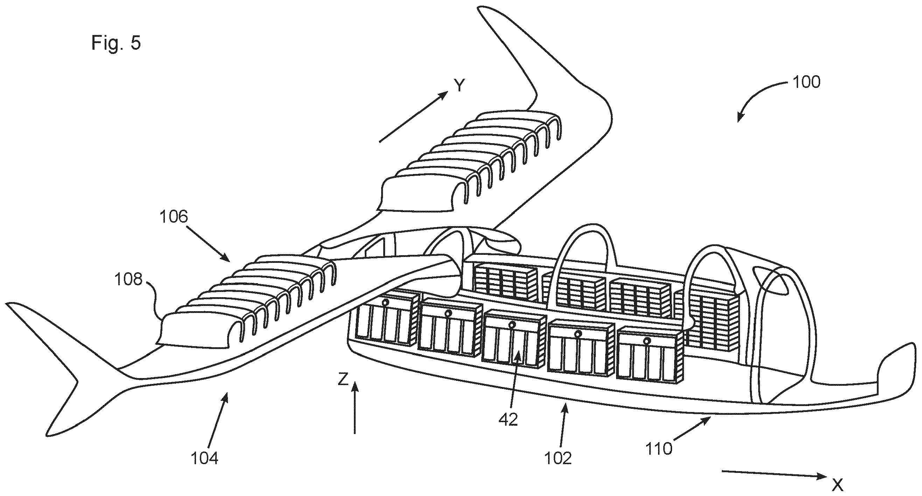

Installed within the housing 22 in its assembled state, the battery stack assembly further comprises a cooling arrangement 36 extending inside the housing 22 and comprising connected cooling plates 38 for the individual battery cell modules 14. The cooling arrangement 36 may be connected to a central cooling system of a superordinate structure, such as the common cooling system 110 of the aircraft 100 shown in Fig.5.

Similarly, an electronics arrangement 40 is installed inside the housing 22 and extends into each battery cell module 14. Said electronics arrangement 40 may for example comprise one temperature sensor per battery cell module 14 and one voltage sensor per battery cell 12 and may deliver corresponding data to the electronics component 50 responsible for supervising and monitoring the functionalities of the battery cells 12 described below. Similar means may be provided for connecting the individual battery cell modules 14 in series or parallel in order to output their electrical power and to re-charge them after operation.

As can in particular be seen in the assembled view on the right side of Fig. 2, in the assembled state of the battery stack assembly 20, the barrier plate members 16 of the battery cell stack 10 have been fixed to the housing 22 to effectively seal the individual battery cell modules 14 from one another and to provide mechanical stability and strength to the assembly 20. For this purpose, different techniques for fixing the barrier plate members 16 to the housing 22 may be employed such as bolting and welding. Also, suitable means for sealing the battery cell modules 14 from one another have to be employed, especially taking into account that the sealing performance of the barrier plate members 16 should not be compromised by the cooling arrangement 26 as well as the electronics arrangement 40 extending inside the housing 22 and into each individual battery cell module 14.

Fig. 3 now shows a battery assembly 42 according to the present invention in an exploded view. The battery assembly 42 comprises in total four identical battery stack assemblies 20 which are aligned in a direction perpendicular to their common stacking direction S and each stacked on top of a base plate assembly 44, such that the individual battery cells 12 of the corresponding battery stack assemblies 20 can also be considered to be stacked on top of the base plate assembly 44 along the stacking direction S. This particular orientation may be beneficial in cases of large forces acting in a vertical direction since due to the stacking and compression of the battery cells as well as the orientation of the housings 22 and the base plate assembly 44, damage to the cells 12 and the overall structure of the battery assembly 42 can be minimized. In the specific use case of the a VTOL aircraft, the stacking direction S of the battery assembly 42 may correspond to the vertical direction of the aircraft, such that in cases of hard landings or even crashes, the battery assembly 42 can stay intact.

The base plate assembly 44 itself is comprised of a structural cover 46 for actually supporting the battery stacks 20 and a lower wall member 48, wherein between the structural cover 46 and the lower wall member 48 an inner space is formed which houses electronics components 50 for managing the battery assembly 42 are housed. Said electronics components 50 may for example comprise at least one cell supervision circuit, at least one current sensor module, at least one power controller and/or one pyrofuse. Said examples for electronics components 50 are as such known in the art, however, by integrating them into the base plate assembly 44, they can be positioned in close proximity to the battery cells 12 they are supposed to supervise and monitor and may be connected to the electronics arrangement 40 described above as well as electrical lines connecting the individual battery cells 12. Thus, the overall size of the battery assembly 42 can be reduced.

Additionally, the battery assembly 42 in a similar manner comprises a top structure assembly 52, which mechanically couples the battery stack assemblies 20 and increases the mechanical strength of the battery assembly 42 in directions perpendicular to the stacking direction S. Both of the base plate assembly 44 and the top structure assembly 52 may be provided with bottom and top mounting points, respectively, in order to be able to mount the battery assembly 42 to a superordinate structure, such as a VTOL aircraft.

Furthermore, Fig. 3 also shows a venting manifold 54, which in its assembled state connects the single outlet openings 34 of all four battery stack assemblies 20 in such a manner that a single common outlet opening 56 is formed through which in case of a thermal runaway event in any of the battery stack assemblies 20 resulting gas can be led out in a safe and controlled manner.

Fig. 4 now shows the battery assembly 42 of Fig. 3 in two views during a thermal runaway event, namely a front view on the right and a cross section view along the plane A-A to the left. Herein, a thermal runway event has occurred in the bottommost battery cell module 14 of the right battery stack assembly 20. Due to the resulting overpressure, the overpressure vent of the through-hole 30 corresponding to this particular battery cell module 14 has burst and the emerging combustion gas is led through the venting duct 32 and its outlet opening 34 into the venting manifold 54 and subsequently through its corresponding outlet opening 56 out of the battery assembly 20. Thus, the thermal influence of the thermal runaway event is restricted to the corresponding battery cell module 14 as well as the venting duct 32 and the venting manifold 54. Neighboring battery cell modules 14 and battery stack assemblies 20 due to the architecture of the battery assembly 42 according to the present invention are sufficiently decoupled both concerning thermal and mechanical influences such that no adverse effects are to be expected on them.

Lastly, in Fig. 5 a VTOL aircraft according to the present invention is shown in a schematic manner and generally denoted with reference numeral 100. The aircraft 100 comprises a fuselage 102, a pair of wings 104 and a pair of canard wings not shown in Fig. 5 for the sake of clarity, yet positioned in front of the wings 104 with respect to the main horizontal flying direction X of the aircraft 100.

To each of the wings 304 and the canard wings, a plurality of propulsion unit structures 106 are connected by means of dedicated attachment assemblies, which allow for pivoting of propulsion motors 108 integrated with the propulsion unit structures 106 with respect to the wings 104 or canard wings around respective axes Y, which substantially correspond to the width direction of the aircraft 100. Each of said propulsion unit structures 106 is formed as a flap pivotably mounted at the trailing edges of the respective wings 104 or canard wings and carrying at least one propulsion motor 108. Herein, the propulsion motors 108 are formed by electrically driven rotors, in particular in ducted fan configurations.

In order to supply the motors 108 with electrical energy, battery assemblies 42 according to the embodiment of Fig. 3 and 4 are provided in the fuselage 102 of the aircraft 100, in particular integrated in the cabin side walls thereof, and are wired and controlled for a corresponding operation of the motors 108 as well as other electrical components of the aircraft 100. In the aircraft 100, the stacking directions S of the battery stack assemblies of the battery assemblies 42 are aligned with the vertical direction Z of the aircraft 100, in order to optimize force distribution in case of hard landings or even crashes. As can also be seen in Fig. 5, a common cooling system 110 is provided for all of the battery assemblies 42 in order to control their operating temperature during flight of the aircraft 100.

## Claims

1. Battery assembly (42), in particular for use in an electrical propulsion VTOL aircraft (100), comprising:
- a base plate assembly (44);
- at least one battery stack assembly (20), each battery stack assembly (20) comprising:
∘ a plurality of battery cells (12) stacked on top of the base plate assembly (20) along a stacking direction (S) thus forming a battery cell stack (10) and electrically connected in parallel or in series; and
∘ a housing (22) surrounding the battery cells (12) on all four sides;
wherein each battery stack assembly (20) comprises at least one barrier plate member (16) inserted between neighbouring battery cells (12) and connected to the housing (22) in order to form at least two separate sealed modules (14) of at least one battery cell (12) each within the corresponding battery stack assembly (20).

2. Battery assembly (42) according to claim 1,
wherein at least one of the battery stack assemblies (20) comprises a top compression plate (18a) and/or a bottom compression plate (18b) compressing the cell stack (10) along the stacking direction (S).

3. Battery assembly (42) according to any of the preceding claims,
wherein at least one of the battery stack assemblies (20) further comprises a cooling arrangement (36) extending inside and/or outside the housing (22) and through and/or into each battery cell module (14), preferably in the form of a succession of connected cooling plates (38) for the individual battery cell modules (14) or in the form of a continuous cooling plate across the battery stack.

4. Battery assembly (42) according to any of the preceding claims,
wherein at least of the battery stack assemblies (20) further comprises an electronics arrangement (40) extending inside the housing (22) and into each battery cell module (14), wherein the electronics arrangement (40) preferably comprises at least one of a temperature sensor and a voltage sensor, for example one temperature sensor per battery cell module (14) and/or one voltage sensor per battery cell (12).

5. Battery assembly (42) according to any of the preceding claims,
wherein for each battery cell module (14), the housing (22) of the battery stack assembly (20) comprises a through-hole (30) provided with an overpressure vent, wherein the through-holes (30) are preferably all positioned on the same side of the housing (22).

6. Battery assembly (42) according to claim 5,
wherein at least one of the battery cell stacks (20) further comprising a venting duct (32) external to the housing (22) connecting at least two of the through holes (30) and comprising an outlet opening (34).

7. Battery assembly (42) according to any of the preceding claims, comprising a plurality of substantially identical battery stack assemblies (20) with their stacking directions (S) arranged in parallel.

8. Battery assembly (42) according to claims 6 and 7,
further comprising a venting manifold (54) connecting the outlet openings (34) of the plurality of battery stack assemblies (20).

9. Battery assembly (42) according to claim 7 or 8,
further comprising a top structure assembly (52) for mechanically coupling the plurality of battery stack assemblies (20),
wherein preferably the top structure assembly (52) is provided with top mounting points for mounting the battery assembly (42) to a superordinate structure.

10. Battery assembly (42) according to any of the preceding claims,
wherein the base plate assembly (44) comprises a structural cover (46) for supporting the at least one battery stack assembly (20) and an inner space, wherein in the inner space electronics components (50) for managing the battery assembly (42) are housed, in particular at least one cell supervision circuit, at least one current sensor module, at least one power controller and/or one pyrofuse;
and/or
wherein the base plate assembly (44), in particular the structural cover (46), comprises bottom mounting points for mounting the battery assembly (42) to a superordinate structure and/or to a neighbouring battery assembly.

11. Battery assembly (42) according to any one of the preceding claims,
wherein the at least one barrier plate member (16) is formed with a mechanical strength which is sufficient to at least carry the mass of all components of the battery cell module (14) positioned above it, preferably of all battery cell modules (14) positioned above it, and/or
wherein the at least one barrier plate member (16) is provided with incombustible and/or heat insulating material on its surfaces.

12. Battery assembly (42) according to any of the preceding claims,
wherein the at least one battery stack assembly (20) comprises in total 54 battery cells (12),
and/or
wherein each battery cell module (14) of the at least one battery stack assembly (20) comprises 6 battery cells (12) or a single battery cell.

13. Electrical propulsion VTOL aircraft (100), comprising a fuselage (102), at least one pair of wings (104), at least one electrical propulsion motor (108) and at least one battery assembly (42) according to any of the preceding claims.

14. Electrical propulsion VTOL aircraft (100) according to claim 13,
wherein a plurality of battery assemblies (42) are provided and positioned in a symmetrical manner in lateral sidewalls of the fuselage (102).

15. Method for assembling a battery assembly (42) according to any of claims 1 to 12, which for each of the battery stack assemblies (20) comprises the following steps:
a) stacking the plurality of battery cells (12) on top of each other with at least one barrier plate member (16) inserted at a desired position between a pair of neighbouring battery cells (12);
b) compressing the resulting battery cell stack (10) along the stacking direction (S);
c) installing the housing (22) around the battery cell stack (10) by fixing the housing (22) to the barrier plate members (16) and optionally upper and/or lower compression plates (18a, 18b);
wherein the housing (22) preferably comprises four individual side walls (24, 26, 28) or a single side wall and a U-shaped wall member.
